# EUROPEAN PATENT APPLICATION

(11) **EP 4 282 256 A1**
(43) Date of publication of application: **29.11.2023**
(21) Application number: 23175379.9
(22) Date of filing: 25.05.2023
(51) Int. Cl.: A01G 9/16

(54) **GROW HOUSE**

(30) Priority: 25.05.2022 GB 202207692
(71) Applicant: Westland Horticulture Limited, Belfast, Antrim BT9 6SA (GB)
(72) Inventor: Barnard, Tim, Dungannon, BT70 1NJ (GB)
(74) Representative: Murgitroyd & Company

(57) **Abstract**

A grow house 1 comprises a front member 4, a rear member 5 and two opposing side walls 2,3, wherein the opposing side walls 2,3 are connected at or towards the top 1a of the grow house such that an angle is formed between the opposing side walls 2,3.

## Description

The present invention relates to grow houses. In particular, grow houses for seedlings and plants.

### Background

Grow houses can be used to shelter and protect seedlings and plants from adverse weather conditions, such as wind and frost. Gardeners often prefer grow houses to greenhouses, especially in smaller gardens, since they are less costly and less bulky and can be moved easily to new positions. While the lightweight nature of grow houses means that they are easily movable, this also makes them susceptible to falling over e.g. during high winds. Furthermore, grow houses often trap heat inside, as they do not include e.g. vents typically found in greenhouses. The present invention is directed at overcoming these problems in the art of grow houses.

### Objects of the invention

It is an object of the invention to provide a more stable garden structure.

It is a further object of the invention to provide a more stable grow house.

It is a further object of the invention to provide a grow house of simplified construction.

It is a further object of the invention to provide a grow house that can be ventilated effectively.

### Summary of the invention

According to a first aspect of the invention there is provided a grow house comprising two opposing side walls, wherein the opposing side walls are connected at or towards the top of the grow house such that an angle is formed between the opposing side walls. Advantageously, the connected side walls provide the grow house with a generally angled structure and form.

Preferably, the angle is an acute angle, an obtuse angle or a right angle.

Preferably, the grow house is leaf shaped.

Preferably, the grow house is ovate, lanceolate, deltoid, cochleate, subulate or cordate.

Preferably, the width of the grow house varies along the height the grow house.

Advantageously, the width of the grow house varies such that the center of gravity of the grow house is lowered.

Preferably, the grow house is arched.

Preferably, the top of the grow house is tapered.

Preferably, the grow house is prismatic.

Preferably, the grow house has a regular cross section.

Preferably, the grow house is symmetrical.

Preferably, each side wall is curved.

Preferably, each side wall follows a smooth curve from the bottom of the grow house to the top of the grow house.

Optionally, one or more side walls is straight, or partially straight.

Optionally, each side wall is straight, or partially straight.

Preferably, the grow house comprises a rear member.

Preferably, the grow house comprises a front member.

Preferably, the grow house comprises a covering means. Advantageously the covering means provides the weather-proof layer which can protect seedlings and/or plants within the grow house.

Preferably, the grow house comprises an internal frame. Advantageously, the internal frame provides strength and stability to the grow house.

Preferably, the covering means covers at least a part of the internal frame.

Preferably, the covering means covers all or substantially all of the internal frame.

Preferably, the covering means comprises a sheath.

Preferably, the covering means is transparent or translucent. Advantageously, the covering means allows light to enter the interior of the grow house.

Preferably, the covering means is flexible.

Preferably, the covering means is waterproof.

Preferably, the covering means is unitary.

Preferably, the front member, rear member and/or side walls are formed by the covering means.

According to a further aspect of the invention there is provided a grow house comprising ventilation means. Advantageously, the ventilation means allows heat and/or humid air to escape from the interior of the grow house.

Preferably, the grow house comprises ventilation means.

Preferably, the grow house comprises adjustable ventilation means.

Advantageously, the adjustable ventilation means allows the amount of ventilation to be adjusted.

Preferably, the ventilation means comprises an opening. Advantageously, the opening provides a path by which heat and/or humid air can escape from the interior of the grow house.

Preferably, the opening is located in the front member. Advantageously, the opening allows ventilation as well as access to the interior of the grow house e.g. for moving items such as plants into and/or out of the interior of the grow house.

Preferably, the ventilation means comprises an opening in the front member.

Preferably, the grow house comprises a door.

Preferably, the ventilation means comprises a door.

Preferably, the door is located in the front member.

Preferably, the opening in the front member is coverable by the door.

Advantageously, the door allows the opening to be covered such that wind and/or frost may be prevented from entering the interior of the grow house.

Preferably, the opening in the front member is partially coverable by the door.

Advantageously, the door allows the opening to be partially covered, such that only a limited amount of heat and/or humid air can escape from the interior of the grow house.

Preferably, the ventilation means is openable from the top. Advantageously, the door being openable from the top means that heat and/or humid air can escape from the top of the grow house i.e. where heat and/or humid air builds up, in use.

Preferably, the ventilation means is openable from the bottom.

Preferably, the door is openable.

Preferably, the door is movable from a closed position to one or more open and/or partially open positions.

Preferably, the door has a fully open position. Advantageously, when the door is in the fully open position items within the grow house are accessible.

Preferably, the door has at least one partially open position. Advantageously, when the door is in a partially open position at least a portion of the grow house can be ventilated.

Preferably, the door has a plurality of partially open positions. Advantageously, the plurality of open positions allows the ventilation of the grow house to be varied. Preferably, the door has a closed position.

Preferably, the door is openable from the top.

Preferably, the door is openable from the bottom.

Preferably, the door comprises a zip.

Preferably, the zip comprises two tabs/sliders.

Preferably, the width of the door varies along the height the grow house.

Preferably, the door is narrowest at or near the top of the grow house.

Preferably, a corner is formed at the top of the door.

Preferably, the corner at the top of the door is curved or smooth.

Preferably, the door is flexible.

Preferably, the door is foldable and/or rollable.

Preferably, the grow house comprises a hinge portion.

Preferably, the door and hinge portion are integrally formed.

Preferably, the door and hinge portion are integrally formed in the front member.

Preferably, the grow house comprises retaining means for the door.

Preferably, the retaining means are configured to retain the door in an open position, such as the fully opened position. for retaining the door.

Preferably, the one or more retaining means for the door are located towards the peripheral edge of the front member.

Preferably, the one or more retaining means comprise string, ribbon or hook-and-loop fasteners.

Preferably, the door is leaf shaped.

Preferably, the door is ovate, lanceolate, deltoid, cochleate, subulate or cordate.

Preferably, the internal frame comprises a plurality of elongate members.

Preferably, the or each elongate member is formed from a tubular member, for example a hollow tubular member made from steel, aluminium or plastic.

Preferably, the internal frame comprises a plurality of elongate corner members.

Preferably, the internal frame comprises four elongate corner members.

Preferably, the internal frame comprises one or more elongate linking members.

Preferably, the or each elongate linking member is connected to one or more elongate corner members.

Preferably, the or each elongate linking member is connected to at least two elongate corner members.

Preferably, the internal frame comprises one or more apex brackets.

Preferably, the internal frame comprises two apex brackets.

Preferably, the internal frame comprises a front apex bracket.

Preferably, the internal frame comprises a rear apex bracket.

Preferably, the or each apex bracket is connected to one or more elongate corner members.

Preferably, the or each apex bracket is connected to two elongate corner members.

Preferably, the grow house comprises one or more anchor points. Advantageously, anchor points allow the grow house to be attached to one or more other objects, and make the grow house less susceptible to falling over during e.g. high winds.

Preferably, the grow house comprises an upper anchor point. Advantageously, the upper anchor points allow the grow house to be securely fixed to e.g. a post or other fixed structure.

Preferably, the upper anchor point is located at the rear of the grow house.

Preferably, the upper anchor point comprises a hole or aperture in the rear apex bracket and/or the covering means.

Preferably, the internal frame comprises a topmost elongate linking member.

Preferably, the topmost elongate linking member is located at the top or apex of the internal frame.

Preferably, the topmost elongate linking member is connected to each elongate corner member.

Preferably, the topmost elongate linking member is connected to each elongate corner member via one or more brackets, such as the apex brackets.

Preferably, the internal frame comprises one or more sidewall elongate linking members.

Preferably, the internal frame comprises six sidewall elongate linking members.

Preferably, the or each sidewall elongate linking member is connected to one or more elongate corner members.

Preferably, the or each sidewall elongate linking member is connected to two elongate corner members.

Preferably, the or each sidewall elongate linking member is perpendicular to the or each elongate corner member.

Preferably, the or each sidewall elongate linking member extends in a direction that is perpendicular to the plane of the or each curved elongate corner member.

According to a further aspect of the invention there is provided a connection means for an internal frame of a grow house. Advantageously, the connection means is adapted to provide a strong and perpendicular connection between a sidewall elongate linking member and an elongate corner member at any position along the height of the elongate corner member.

Preferably, the grow house comprises a connection means.

Preferably, the or each sidewall elongate linking member is connected to at least one elongate corner member via a connection means. Preferably, the connection means comprises receiving member and a fixing means.

Preferably, the fixing means is a pin, bolt or screw.

Preferably, the receiving member is connected to the sidewall elongate linking member.

Preferably, the receiving member is located within the sidewall elongate linking member.

Preferably, the or each fixing means passes through an elongate corner member.

Preferably, the or each fixing means passes through an aperture in an elongate corner member.

Preferably, the or each fixing means passes into a receiving member.

Preferably, the or each fixing means passes into a channel in a receiving member.

Preferably, the or each fixing means passes through a receiving member.

Optionally, the or each fixing means and/or channel is at least partially threaded.

Optionally, the or each channel is threaded.

Preferably, the grow house comprises a base. Advantageously, the base provides stability to the grow house.

Preferably, the base comprises a frame.

Preferably, the base comprises a frame formed of one or more elongate base members.

Preferably, the base comprises a frame formed of four elongate base members.

Preferably, the or each elongate base member is formed from a tubular member, for example a hollow tubular member made from steel, aluminium or plastic.

Preferably, the elongate base members are connected at the corners of the base.

Preferably, the grow house comprises a rectangular or substantially rectangular base.

Preferably, each elongate corner member is connected to the base.

Preferably, each elongate corner member is connected to a corner of the base.

Preferably, the grow house comprises one or more base anchor points.

Preferably, the grow house comprises four base anchor points.

Preferably, the or each base anchor point is located at a corner of the base.

Preferably, the or each base anchor point comprises a plate having an aperture formed therein. Advantageously a fastening means such as a peg or pin can pass through the aperture and into the ground, to securely hold the grow house in position.

Preferably, the grow house comprises at least one shelf. Advantageously, the or each shelf allows seedlings and/or plants to be stored inside the grow house.

Preferably, the grow house comprises a plurality of shelves. Advantageously, a plurality of shelves allow multiple levels of seedlings and/or plants to be stored inside the grow house.

Preferably, the grow house comprises a plurality of parallel horizontal shelves.

Preferably, each shelf has a different size.

Preferably, the uppermost shelf is smallest.

Preferably, the uppermost shelf has the smallest area.

Preferably, the area of each shelf decreases with the height of the grow house.

Preferably, the or each shelf is rectangular or substantially rectangular.

Preferably, the or each shelf comprises a shelf base.

Preferably, the or each shelf base comprises one or more elongate shelf base members.

Preferably, the or each shelf base comprises two elongate shelf base members.

Preferably, the or each shelf base comprises a front elongate shelf base member.

Preferably, the or each front elongate shelf base member is adjacent to the front member of the grow house.

Preferably, the or each shelf base comprises a rear elongate shelf base member.

Preferably, the or each back elongate shelf base member is adjacent to the rear member of the grow house.

Preferably, the or each elongate shelf base member is formed from a tubular member, for example a hollow tubular member made from steel, aluminium or plastic.

Preferably, the or each shelf base member is substantially horizontal, in use.

Preferably, the or each elongate shelf base member is attachable to one or more sidewall elongate linking members.

Preferably, the or each elongate shelf base member extends between the side walls of the grow house.

Preferably, the or each elongate shelf base member extends between two sidewall elongate linking members.

Preferably, the or each elongate shelf base member is attachable to one or more sidewall elongate linking members.

Preferably, the or each elongate shelf base member is attachable to two sidewall elongate linking members.

Preferably, the or each elongate shelf base member is attachable to a sidewall elongate linking member via a joining means.

Preferably, the or each elongate shelf base member comprises one or more joining means.

Preferably, the or each elongate shelf base member comprises two joining means.

Preferably, the or each joining means is located at a peripheral end of the elongate shelf base member.

Preferably, the joining means is adapted to rest on a sidewall elongate linking member, in use.

Preferably, the joining means is adapted to receive a portion of an elongate linking member.

Preferably, the joining means comprises a curved or hooked portion.

Preferably, the or each shelf comprises a planar member, grid or grille.

Advantageously, one or more objects such as seed trays or pots can rest on the planar member, grid or grille, in use.

Preferably, the planar member, grid or grille of the or each shelf is supported by the or each elongate shelf base member, in use.

Preferably, the planar member, grid or grille of the or each shelf rests on the or each elongate shelf base member, in use.

Preferably, the or each shelf extends between the side walls.

Preferably, the or each shelf extends between the front member and the rear member.

Preferably, the or each shelf is accessible through the opening.

According to a further aspect of the invention there is provided a grow house comprising two opposing side walls, wherein the opposing side walls are curved.

Advantageously, the curved side walls provide the grow house with a generally stable structure and form.

According to a further aspect of the invention there is provided a kit of parts for forming a grow house.

Preferably, the kit of parts comprises a plurality of elongate members.

Preferably, the kit of parts comprises a covering means.

Preferably, the kit of parts comprises one or more trays, such as seed trays, and/or pots.

### Drawings

The invention will be more clearly understood by the following description of some embodiments thereof, given by way of example only with reference to the accompanying drawings, in which:
Figure 1 is a perspective view of a grow house according to an aspect of the invention.
Figure 2 is a further perspective view of the grow house according to an aspect of the invention.
Figure 3 is a further perspective view of the grow house according to an aspect of the invention.
Figure 4 is a further perspective view of the grow house according to an aspect of the invention.
Figure 5 is a perspective view of the internal frame of the grow house according to an aspect of the invention.

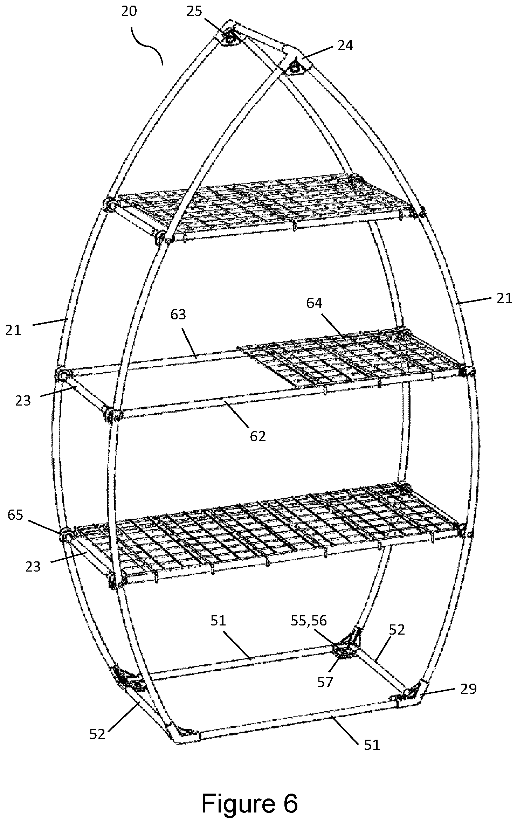

Figure 6 is a further perspective view of the internal frame of the grow house according to an aspect of the invention.
Figure 7 is an exploded perspective view of a connection arrangement according to an aspect of the invention.
Figure 8 is a perspective view of the connection arrangement according to an aspect of the invention.
Figure 9 is a detail perspective view of the internal frame of the grow house according to an aspect of the invention.
Figure 10 is a further detail perspective view of the internal frame of the grow house according to an aspect of the invention.
Figure 11 is a further detail perspective view of the internal frame of the grow house according to an aspect of the invention.
Figure 12 shows front views of an alternative grow house according to an aspect of the invention.
Figure 13 shows front views of a further alternative grow house according to an aspect of the invention.

### Detailed description

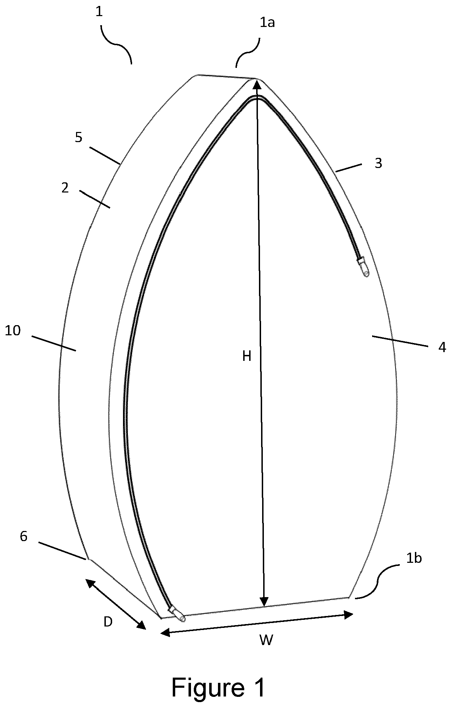

Figure 1 shows a grow house 1 according to an aspect of the invention. The grow house 1 comprises two opposing side walls 2,3, a front member 4, a rear member 5 and a base 6. The opposing side walls are connected at or towards the top or apex 1a of the grow house 1 such that an angle is formed between the opposing side walls 2,3. The connected side walls 2,3 provide the grow house 1 with a generally angled structure and form. The angle may be an acute angle, an obtuse angle or a right angle.

In the embodiment disclosed in figure 1 the grow house 1 is leaf shaped. In this example the grow house is generally ovate (with a flat portion at the bottom 1b of the grow house 1), but lanceolate, deltoid, cochleate, subulate or cordate shapes can also be used in a similar way, for example. The grow house 1 is arched or tapered at the top 1a.

As shown in figure 1, the width W of the grow house 1 varies along the height H the grow house 1, the width W corresponding to the horizontal distance between the opposing side walls 2,3 and the height corresponding to the maximum distance between the base 6 and the top 1a of the grow house 1. The width W of the grow house varies such that the center of gravity of the grow house is lowered, for example when compared to what would be the case for a grow house having a constant width W along its height. Figure 1 also shows that the grow house 1 is symmetrical i.e. has a vertical line of symmetry. Each side wall 2,3 follows a smooth curve from the bottom 1b of the grow house to the top 1a of the grow house 1.The side walls curve in opposing directions on either side of the line of symmetry and meet at the top or apex 1a of the grow house.

The grow house 1 is prismatic, that is, the grow house as a regular cross section along the depth D of the grow house 1, the depth D corresponding to the horizontal distance between the front member 4 and rear member 5.

The grow house 1 comprises a covering 10. The covering 10 is a unitary member which forms the front member 4, rear member 5 and side walls 2,3. The covering 10 may be formed of a plurality of panels that are joined together via bonding, sewing etc. The covering 10 provides a weather-proof layer or sheath which can protect seedlings and/or plants within the grow house 1. The covering 10 is flexible and waterproof. The covering 10 is transparent or translucent to allow light to enter the interior of the grow house 1.

The grow house 1 comprises an internal frame 20. The internal frame 20 provides strength, stability and internal support to the grow house 1. In use, the internal frame 20 supports the covering 10. The covering 10 covers at least a part of the internal frame. In preferred embodiments the covering 10 is adapted to cover all or substantially all of the internal frame 20, at least in some configurations.

The grow house 1 comprises a ventilation arrangement 40. The ventilation arrangement 40 allows heat and/or humid air to escape from the interior of the grow house 1, in use. The ventilation arrangement 40 is adjustable in that the amount of ventilation provided by the ventilation arrangement 40 can be adjusted between a minimum ventilation level and a maximum ventilation level.

The ventilation arrangement 40 comprises an opening 41. The opening 41 provides a path by which heat and/or humid air can escape from the interior 1c of the grow house 1. The opening 41 is located in the front member 4. The opening 41 allows ventilation as well as access to the interior 1c of the grow house 1 e.g. for moving items such as plants, pots or trays into and/or out of the interior 1c of the grow house 1.

The ventilation arrangement 40 comprises a door 42. The door 42 is located in the front member 4. The opening 41 in the front member 4 is coverable by the door 42. The door 42 allows the opening 41 to be covered such that wind and/or frost may be prevented from entering the interior 1c of the grow house 1.

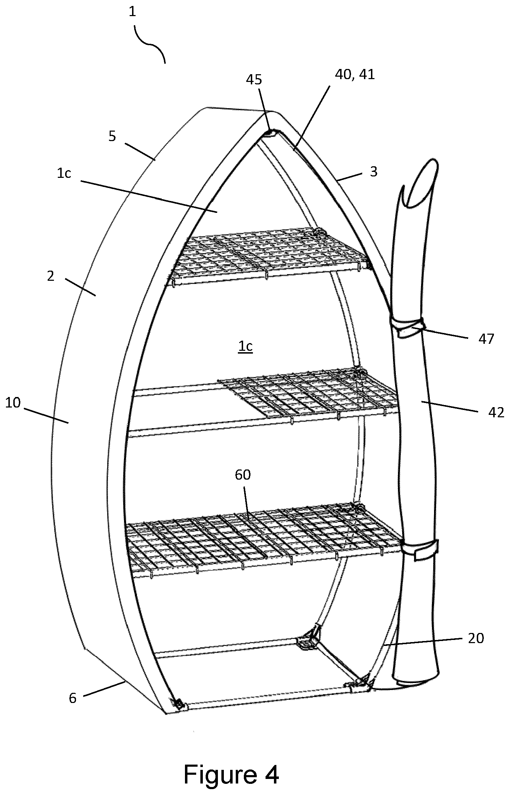

The door 42 is connectable to the front member 4 by a zip 43. The door 42 is connected to the front member 4 by a hinge portion 44. The zip 43 comprises two pull tabs/sliders 45,46 which allow the zip 43 to be opened from either side. One end of the zip 43 extends to the lower edge of the front member 4. The door 42 and hinge portion 44 are integrally formed in the front member 4. The door 42 is flexible and can be folded and/or rolled to allow storage at an edge of the front member 4 (see e.g. figure 4). Retaining members 47, in the form of strings, ribbons or hook- and-loop fasteners, are located towards the peripheral edge of the front member 4. The retaining members 47 are configured to retain the door 42 in an open position.

The door 42 is leaf shaped, and the width of the door 42 varies along the height the grow house 1. The door 42 is ovate but may be lanceolate, deltoid, cochleate, subulate or cordate. The door 42 is narrowest at or near the top 1a of the grow house 1. In the present embodiment a curved or smooth corner 45 is formed at the top of the door 42. The door 42 extends the full width, or nearly the full width, of the front member 4.

The opening 41 in the front member is at least partially coverable by the door 42. The door 42 allows the opening 41 to be partially covered, such that only a limited amount of heat and/or humid air can escape from the interior 1c of the grow house 1. The door 42 is openable from the top and from the bottom. The door 42 being openable from the top (i.e. from the uppermost part of the door 42 adjacent to the top 1a of the grow house 1) means that heat and/or humid air can escape from the top of the grow house 1 i.e. at the place where heat and/or humid air tends to build up, in use.

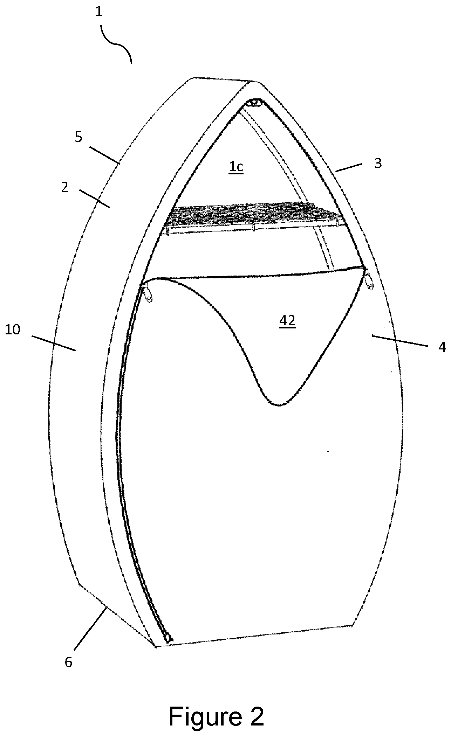

The door 42 has a closed position (figure 1). In the closed position the door 42 fully covers the opening 41. The door 42 is movable from the closed position (figure 1) to one or more open and/or partially open positions (figures 2-4). The door 42 has a fully open position (figure 4). When the door 42 is in the fully open position, the opening is not covered by the door 41 and items/shelves within the grow house 1 are accessible.

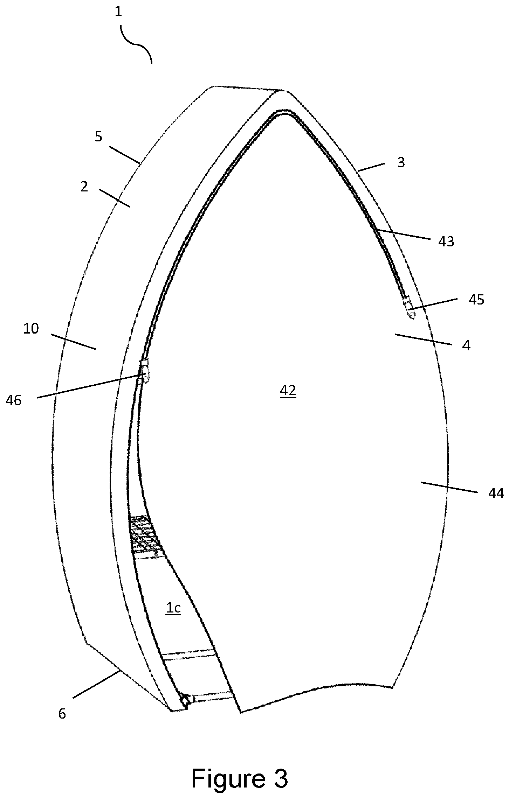

The door 42 has a plurality of partially open positions. Figure 2 shows the door 42 partially opened from the top and figure 3 shows the door 42 partially opened from the bottom. When the door 42 is in a partially open position at least a portion of the grow house 1 can be ventilated, and at least a portion of the interior 1c of the grow house is accessible. The door 42 having a plurality of partially open positions provides the user with an increased level of ventilation control, and allows the ventilation of the grow house to be varied.

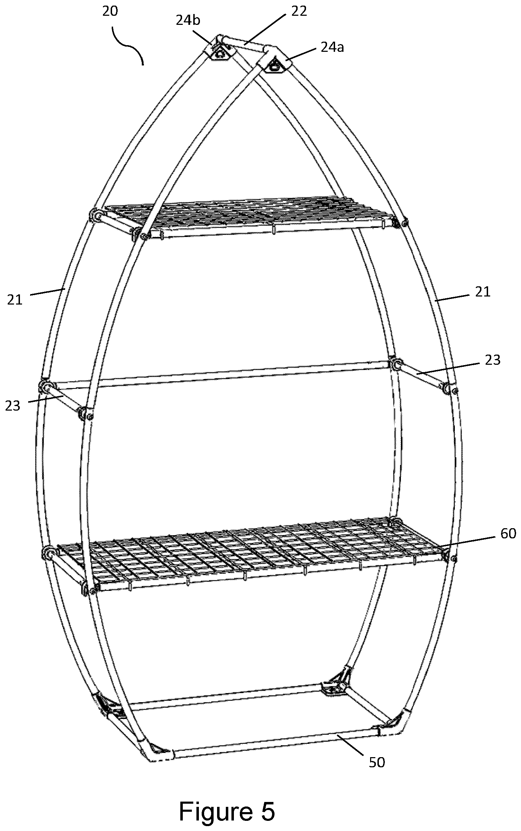

Figure 5 shows the internal frame 20 of the grow house 1. The internal frame 20 comprises a plurality of elongate members 21,22,23. Each elongate member 21,22,23 is formed from a tubular member, for example a hollow tubular member made from steel, aluminium or plastic.

The internal frame 20 comprises four elongate corner members 21 and a plurality of elongate linking members 22,23. Each elongate linking member 22,23 is connected to at least two elongate corner members 21.

The internal frame 20 comprises two apex brackets 24: a front apex bracket 24a and a rear apex bracket 24b. Each apex bracket 24 is connected to two elongate corner members 21. The internal frame 20 comprises four base brackets 29. Each bas bracket 29 is connected to one elongate corner member 21.

The internal frame 20 comprises a topmost elongate linking member 22. The topmost elongate linking member 22 is located at the top or apex of the internal frame 20. The topmost elongate linking member 22 is connected to each elongate corner member 21 via the apex brackets 24.

The internal frame comprises six sidewall elongate linking members 23. Each sidewall elongate linking member 23 is connected to two elongate corner members 21. Each sidewall elongate linking member 23 is perpendicular to the elongate corner members 21 to which it is connected. In other words, each sidewall elongate linking member 23 extends in a direction that is perpendicular to the plane of the or each curved elongate corner member 21. The topmost elongate linking member 22 extends in the same direction as each sidewall elongate linking member 23. The elongate linking members 22,23 are parallel.

Each sidewall elongate linking member 23 is connected to at least one elongate corner member 21 via a connection arrangement 30. Each connection arrangement 30 is adapted to provide a strong and perpendicular connection between a sidewall elongate linking member 23 and an elongate corner member 21 at any position along the height of the elongate corner member 21.

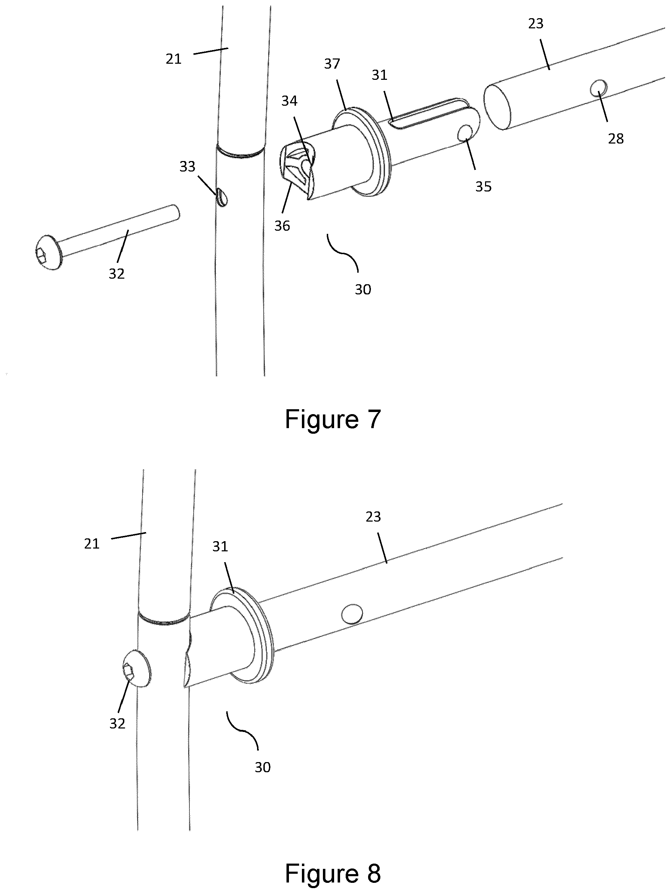

Figures 7 and 8 show an example connection arrangement 30. The example connection arrangement 30 comprises a receiving member 31 and a fixing member 32.

The receiving member 31 is connected to a sidewall elongate linking member 23. In particular, the receiving member 31 is located within the tubular sidewall elongate linking member 23. The receiving member 31 may be fixed to the tubular sidewall elongate linking member 23 by a fixing member such as a screw or pin which passes through respective apertures 35,38 in receiving member 31 and the tubular sidewall elongate linking member 23. The receiving member 31 comprises a curved surface 36 to accommodate the edge of an elongate corner member. The receiving member 31 comprises a collar 37 to hold a joining arrangement 65 in place.

The fixing member 32 passes through an aperture 33 in an elongate corner member 21 and into a channel 34 in the receiving member 31. In optional embodiments the fixing member 32 and/or channel 34 is at least partially threaded. The fixing member 32 may be a pin, bolt or screw.

The grow house 1, in particular the internal frame 20, comprises a base 50. The base 50 provides stability to the grow house 1. The base 50 comprises a rectangular frame formed of four elongate base members 51. Each elongate base member 51 is formed from a tubular member, for example a hollow tubular member made from steel, aluminium or plastic. The elongate base members 51 are connected at the corners of the base 50 for example via base brackets 29 and/or welded joints. Each elongate corner member 21 is connected to, and extends from, a corner of the base 50.

The grow house 1 comprises anchor points 25,55. Anchor points 25,55 allow the grow house to be attached to one or more other objects, making the grow house 1 less susceptible to falling over during e.g. high winds.

The grow house 1 comprises an upper anchor point 25. The upper anchor point 25 allows the grow house 1 to be securely fixed to e.g. a post or other fixed structure. The upper anchor point 25 is located at the rear of the grow house 1 i.e. adjacent to the rear member 5. The upper anchor point 25 comprises a hole or aperture 26 in the rear apex bracket 24b and/or the covering 10 through which a fastener such as a rope or wire can extend.

The grow house 1 comprises four base anchor points 55. Each base anchor point 55 is located at a corner of the base 50. Each base anchor point 55 comprises a plate 56 having an aperture 57 formed therein. A fastener such as a peg or pin can pass through the aperture 57 and into the ground below the grow house 1, to securely hold the grow house 1 in position.

The grow house 1 comprises a plurality of parallel horizontal shelves 60. The shelves 60 allow multiple levels of seedlings and/or plants to be stored inside the grow house 1. Each shelf 60 extends between the side walls 2,3 and between the front member 4 and the rear member 5.

In the present embodiment each shelf has a different size/width. The uppermost shelf is smallest i.e. has the smallest area. In the present embodiment the largest shelf is the lowermost shelf and the surface area of each shelf decreases with the height H of the grow house 1. The surface area of the base 50 is smaller than the surface area of the largest shelf 60. The width of the base 50 is smaller than the width of the largest shelf 60.

Each shelf 60 is rectangular. Each shelf 60 comprises a shelf base 61. Each shelf base 61 comprises two elongate shelf base members 62,63: a front elongate shelf base member 62 and a rear elongate shelf base member 63. Each front elongate shelf base member 62 is adjacent to the front member 4 of the grow house 1. Each rear elongate shelf base member 63 is adjacent to the rear member 5 of the grow house 1. Each elongate shelf base member 62,63 is formed from a tubular member, for example a hollow tubular member made from steel, aluminium or plastic. Each shelf base member 62,63 is substantially horizontal, in use.

Each elongate shelf base member 62,63 is attachable to two sidewall elongate linking members 23. Each elongate shelf base member 62,63 extends between the side walls 2,3 of the grow house 1, and between two sidewall elongate linking members 23. Each elongate shelf base member 62,63 is attached to a sidewall elongate linking member 23 via a joining arrangement 65. Each elongate shelf base member 62,63 comprises two joining arrangements 65 located at the peripheral ends of the respective elongate shelf base member 62,63. Each joining arrangement 65 is adapted to rest on a sidewall elongate linking member 23, in use.

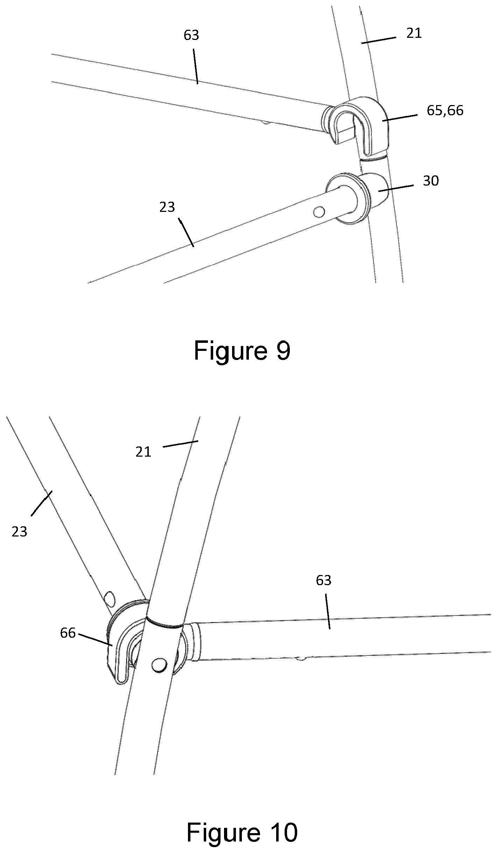

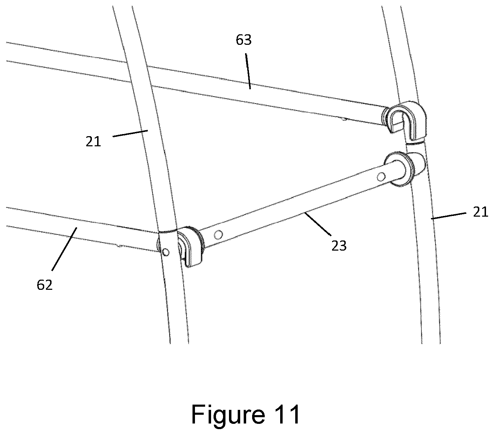

Figures 9-12 show an example joining arrangement 65. The joining arrangement 65 is adapted to receive a portion of a sidewall elongate linking member 23. The joining arrangement 65 comprises a curved or hooked portion 66.

Each shelf 60 comprises a planar member, grid or grille 64. One or more objects such as seed trays or pots can rest on the planar member, grid or grille 64, in use. The planar member, grid or grille 64 of the or each shelf is supported by and rests on the elongate shelf base members 62,63, in use. The edges of the planar member, grid or grille 64 may be angled to engage with the elongate shelf base members 62,63.

In use, the grow house 1 can be used to propagate plants and seedlings. Seed trays and/or pots of seedlings or plants can be stored within the grow house 1 and the temperature and/or humidity inside the grow house may be adjusted by adjusting the ventilation arrangement 40. The grow house may be able to store up to twelve trays.

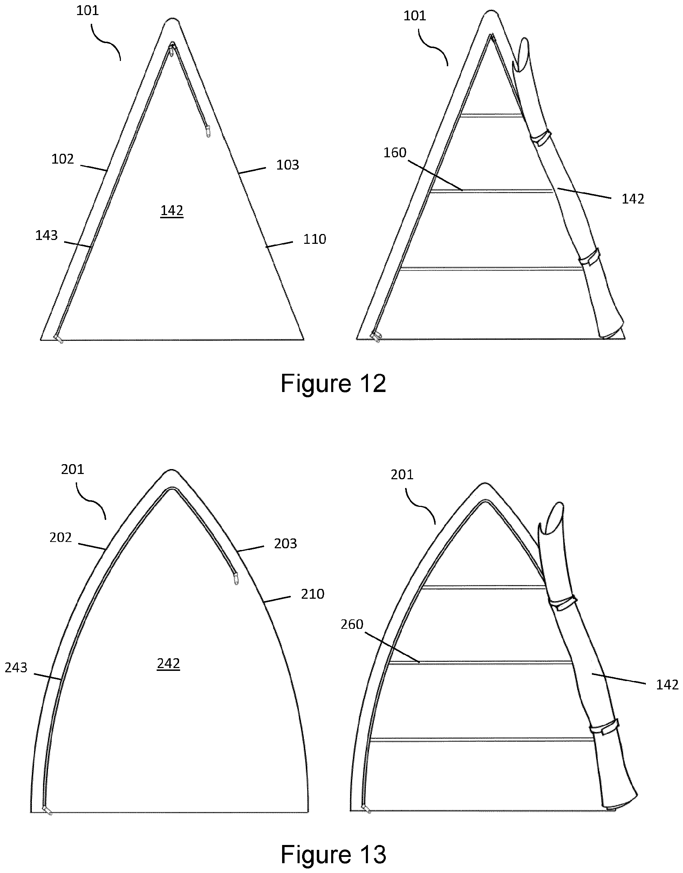

In optional embodiments the angle between the side walls and/or the shape of the side walls may be varied. Figure 12 shows an alternative grow house 101 according to the invention. The alternative grow house 101 has two substantially straight opposing side walls 102,103 that are connected at or towards the top or apex of the grow house 101 such that an angle is formed between the opposing side walls 202,203. Figure 12 shows the grow house 101 with the door 142 in the closed position (left panel) and in the open position (right panel). Figure 13 shows a further alternative grow house 101 according to the invention. The further alternative grow house 201 has two curved side walls 202,203 that are connected at or towards the top or apex of the grow house 201 such that an angle is formed between the opposing side walls 202,203. Figure 13 shows the grow house 201 with the door 242 in the closed position (left panel) and in the open position (right panel). The grow houses shown in figures 12 and 13 are generally similar to the grow houses of the previous embodiment, with similar numerals denoting similar features.

The grow house 1 may be provided in kit form i.e. a kit of parts for forming a grow house falls within an aspect of the invention. The kit of parts can include any or all of the components outlined above, to allow the grow house to be assembled. For example, the kit of parts can comprise a plurality of elongate members and a covering. The kit of parts may further include one or more trays, such as seed trays, and/or pots.

In optional embodiments the grow house may be a walk-in grow house, and may be a greenhouse or polytunnel. In optional embodiments the top of the grow house may be at least partially flat.

The invention is not limited to the embodiments hereinbefore described which may be varied in both construction and detail within the scope of the appended claims.

## Claims

1. A grow house comprising a front member, a rear member and two opposing side walls, wherein the opposing side walls are connected at or towards the top of the grow house such that an angle is formed between the opposing side walls.

2. A grow house according to claim 1, wherein the grow house is leaf shaped.

3. A grow house according to claim 1 or claim 2, wherein each side wall follows a smooth curve from the bottom of the grow house to the top of the grow house.

4. A grow house according to any preceding claim, wherein the grow house comprises ventilation means, optionally wherein the ventilation means comprises a zipped opening in the front member.

5. A grow house according to any preceding claim, wherein the grow house comprises a door located in the front member, optionally wherein the door is openable from the top and/or wherein the door is openable from the bottom.

6. A grow house according to any one of claim 5, wherein the door is narrowest at or near the top of the grow house, optionally wherein an angle is formed at the top of the door.

7. A grow house according to any preceding claim, wherein the grow house comprises an internal frame, wherein the internal frame comprises four elongate corner members and one or more elongate linking members, optionally wherein the grow house comprises a rectangular or substantially rectangular base.

8. A grow house according to any preceding claim, wherein the grow house comprises one or more shelves, and wherein the or each shelf extends between the side walls.

9. A grow house according to claim 8, wherein the grow house comprises a plurality of shelves, optionally wherein each shelf has a different size, optionally wherein the uppermost shelf is smallest.

10. A grow house according to claim 8 or claim 9, wherein the or each shelf comprises a planar member, grid or grille.

11. A grow house according to any one of claims 8 to 10, wherein the or each shelf is connected to each elongate corner member.

12. A grow house according to any one of claims 8 to 11, wherein the or each shelf is connected to the or each elongate corner member via a connection means, wherein the connection means comprises receiving member and a fixing member.

13. A grow house according to claim 12, wherein the or each fixing member passes through an elongate corner member and a receiving member.

14. A grow house according to any preceding claim, wherein the grow house comprises a covering means and wherein the covering means covers at least a part of the internal frame, optionally wherein the covering means is transparent or translucent and/or wherein the covering means is flexible and/or wherein the covering means is waterproof.

15. A kit of parts for forming a grow house according to any preceding claim, the kit of parts comprising at least: a plurality of elongate members; and a covering means.
